# DEMANDE DE BREVET EUROPEEN

(11) **EP 4 298 961 A1**
(43) Date de publication de la demande: **03.01.2024**
(21) Numéro de dépôt: 23181032.6
(22) Date de dépôt: 22.06.2023
(51) Int. Cl.: A47J 27/21

(54) **BOUILLOIRE ÉQUIPÉE D'UN CIRCUIT D'ÉVACUATION DE VAPEUR**

(30) Priorité: 30.06.2022 FR 2206680
(71) Demandeur: SEB S.A., 69130 Ecully (FR)
(72) Inventeur: DUMOUX, Philippe, 69134 ECULLY CEDEX (FR); ALLEMAND, Bernard, 69134 ECULLY CEDEX (FR); SMAL, Chloé, 69134 ECULLY CEDEX (FR); MANSEAU, Charles, 69134 ECULLY CEDEX (FR)
(74) Mandataire: Germain Maureau

(57) **Abrégé**

La bouilloire (2) comprend un contenant (4) délimitant un volume interne destiné à contenir de l'eau ; une poignée de préhension (8) ; un bec verseur (9) ; un couvercle (11) ; un circuit d'évacuation de vapeur comprenant des premier et deuxième orifices d'admission de vapeur débouchant dans une face inférieure du couvercle (11) et configurés pour être disposés de part et d'autre d'un plan vertical médian (P) de la bouilloire (2) qui passe par le bec verseur (9) et la poignée de préhension (8), et des premier et deuxième tubes d'écoulement de vapeur (35, 36) reliés fluidiquement respectivement aux premier et deuxième orifices d'admission de vapeur et débouchant dans une chambre interne (31) délimitée par le couvercle (11).

## Description

### Domaine technique

La présente invention concerne le domaine des appareils de chauffage de liquides, et en particulier des bouilloires électriques.

### Etat de la technique

Le document GB2488204 divulgue une bouilloire électrique comprenant :
- un contenant présentant un axe central configuré pour s'étendre sensiblement verticalement lorsque le contenant repose sur une surface horizontale, le contenant délimitant un volume interne destiné à contenir de l'eau et dans lequel l'eau est destinée à être chauffée et notamment portée à ébullition,
- une poignée de préhension fixée au contenant,
- un bec verseur situé à l'opposé de la poignée de préhension par rapport à l'axe central du contenant,
- un couvercle configuré pour fermer le contenant, le couvercle comprenant une face inférieure configurée pour être située en regard du volume interne, et
- un circuit d'évacuation de vapeur configuré pour convoyer, à l'extérieur du volume interne et par exemple vers l'extérieur de la bouilloire, de la vapeur générée dans le volume interne lors d'une ébullition de l'eau contenue dans le volume interne.

Le circuit d'évacuation de vapeur comprend notamment :
- un premier orifice d'admission de vapeur et un deuxième orifice d'admission de vapeur qui sont prévus sur le couvercle et qui débouchent dans la face inférieure du couvercle et à proximité d'un bord périphérique de la face inférieure du couvercle, les premier et deuxième orifices d'admission de vapeur étant configurés être reliés fluidiquement au volume interne et pour être disposés de part et d'autre d'un plan vertical médian de la bouilloire qui passe par le bec verseur et la poignée de préhension,
- une chambre interne délimitée par le couvercle,
- un premier tube d'écoulement de vapeur comprenant une première ouverture d'entrée de vapeur reliée fluidiquement au premier orifice d'admission de vapeur et une première ouverture de sortie de vapeur débouchant dans la chambre interne, et un deuxième tube d'écoulement de vapeur comprenant une deuxième ouverture d'entrée de vapeur reliée fluidiquement au deuxième orifice d'admission de vapeur et une deuxième ouverture de sortie de vapeur débouchant dans la chambre interne, et
- au moins une ouverture d'évacuation de vapeur reliée fluidiquement à la chambre interne et configurée pour permettre une évacuation de la vapeur contenue dans la chambre interne à l'extérieur du couvercle et par exemple vers l'extérieur de la bouilloire.

La bouilloire est configurée de telle sorte que, lorsque la bouilloire est renversée et que la poignée de préhension et un premier côté latéral du contenant reposent de manière stable sur une surface horizontale (ce qui correspond à une première position renversée stable de la bouilloire), le premier orifice d'admission de vapeur est situé au-dessus du niveau d'eau dans le volume interne, et de telle sorte que, lorsque la bouilloire est renversée et que la poignée de préhension et un deuxième côté latéral du contenant reposent de manière stable sur une surface horizontale (ce qui correspond à une deuxième position renversée stable de la bouilloire), le deuxième orifice d'admission de vapeur est situé au-dessus du niveau d'eau dans le volume interne.

Une telle configuration de la bouilloire réduit les risques d'écoulement d'eau bouillante dans le couvercle, et donc hors de la bouilloire via l'au moins une ouverture d'évacuation de vapeur, lorsque la bouilloire est basculée sur le côté.

Cependant, lorsque la bouilloire décrite dans le document GB2488204 occupe la première position renversée stable, le premier orifice d'admission de vapeur est situé à proximité du niveau d'eau dans le volume interne. De même, lorsqu'une telle bouilloire occupe la deuxième position renversée stable, le deuxième orifice d'admission de vapeur est également situé à proximité du niveau d'eau dans le volume interne.

Par conséquent, si un utilisateur remplit le contenant au-delà d'un niveau de remplissage maximal et que la bouilloire est ensuite renversée, l'orifice d'admission de vapeur, supposé être situé au-dessus du niveau d'eau, est alors susceptible d'être situé en-dessous du niveau d'eau, ce qui peut provoquer un important écoulement d'eau bouillante dans le couvercle et ensuite hors de la bouilloire via l'au moins une ouverture d'évacuation de vapeur. Or, un tel écoulement d'eau bouillante hors de la bouilloire est susceptible de provoquer des brûlures à un utilisateur.

En raison des vagues engendrées dans le volume interne du contenant lors d'un basculement de la bouilloire, même lorsque l'utilisateur n'a pas rempli le contenant au-delà du niveau de remplissage maximal, de l'eau est également susceptible de s'écouler à travers l'orifice d'admission de vapeur situé au-dessus du niveau d'eau.

Pour palier un tel inconvénient, il est connu d'équiper le couvercle avec des clapets antiretours, tels que des clapets à bille, configurés pour empêcher un écoulement d'eau à travers les premier et deuxième tubes d'écoulement de vapeur en cas de renversement de la bouilloire. Toutefois, de tels clapets antiretours complexifient la bouilloire et augmentent sensiblement les coûts de fabrication de cette dernière.

### Résumé de l'invention

La présente invention vise à remédier à tout ou partie de ces inconvénients.

Le problème technique à la base de l'invention consiste notamment à fournir une bouilloire qui soit de structure simple et économique, tout en présentant une grande sécurité d'utilisation.

A cet effet, la présente invention concerne une bouilloire, et en particulier une bouilloire électrique, comprenant :
- un contenant présentant un axe central configuré pour s'étendre sensiblement verticalement lorsque le contenant repose sur une surface horizontale, le contenant délimitant un volume interne destiné à contenir de l'eau et dans lequel l'eau est destinée à être chauffée et notamment portée à ébullition,
- une poignée de préhension, par exemple fixée au contenant,
- un bec verseur configuré pour être situé à l'opposé de la poignée de préhension par rapport à l'axe central du contenant,
- un couvercle configuré pour fermer le contenant, le couvercle comprenant une face inférieure configurée pour être située en regard du volume interne,
- un circuit d'évacuation de vapeur configuré pour convoyer, à l'extérieur du volume interne et par exemple vers l'extérieur de la bouilloire, de la vapeur générée dans le volume interne lors d'une ébullition de l'eau contenue dans le volume interne, le circuit d'évacuation de vapeur comprenant :
   o un premier orifice d'admission de vapeur et un deuxième orifice d'admission de vapeur qui sont prévus sur le couvercle et qui débouchent dans la face inférieure du couvercle et à proximité d'un bord périphérique de la face inférieure du couvercle, les premier et deuxième orifices d'admission de vapeur étant configurés pour être reliés fluidiquement au volume interne délimité par le contenant, et par exemple pour être situés au-dessus d'un niveau de remplissage maximal du contenant, et pour être disposés de part et d'autre d'un plan vertical médian de la bouilloire qui passe par le bec verseur et la poignée de préhension,
   ∘ une chambre interne délimitée par le couvercle, et
   ∘ un premier tube d'écoulement de vapeur comprenant une première ouverture d'entrée de vapeur reliée fluidiquement au premier orifice d'admission de vapeur et une première ouverture de sortie de vapeur débouchant dans la chambre interne, et un deuxième tube d'écoulement de vapeur comprenant une deuxième ouverture d'entrée de vapeur reliée fluidiquement au deuxième orifice d'admission de vapeur et une deuxième ouverture de sortie de vapeur débouchant dans la chambre interne.

La bouilloire est configurée de telle sorte que, lorsque la bouilloire est renversée et que la poignée de préhension et un premier côté latéral du contenant reposent de manière stable sur une surface horizontale, le premier orifice d'admission de vapeur est situé au-dessus du niveau d'eau dans le volume interne et est localisé dans un premier secteur angulaire qui est centré sur l'axe central du contenant, qui présente un premier angle de secteur inférieur ou égal à 60°, avantageusement inférieur ou égal à 40° et par exemple inférieur ou égal à 20°, et dont une bissectrice est contenue dans un premier plan vertical contenant l'axe central du contenant, et de telle sorte que, lorsque la bouilloire est renversée et que la poignée de préhension et un deuxième côté latéral du contenant reposent de manière stable sur une surface horizontale, le deuxième orifice d'admission de vapeur est situé au-dessus du niveau d'eau dans le volume interne et est localisé dans un deuxième secteur angulaire qui est centré sur l'axe central du contenant, qui présente un deuxième angle de secteur inférieur ou égal à 60°, avantageusement inférieur ou égal à 40° et par exemple inférieur ou égal à 20°, et dont une bissectrice est contenue dans un deuxième plan vertical contenant l'axe central du contenant.

En d'autres termes, la bouilloire est configurée de telle sorte que, lorsque la bouilloire est renversée et que la poignée de préhension et un premier côté latéral du contenant reposent de manière stable sur une surface horizontale, le premier orifice d'admission de vapeur est situé au-dessus du niveau d'eau dans le volume interne et est localisé dans un premier secteur angulaire centré sur l'axe central du contenant et comportant un premier côté et un deuxième côté disposés de part et d'autre d'un premier plan vertical contenant l'axe central du contenant et de manière symétrique par rapport au premier plan vertical, le premier secteur angulaire ayant un premier angle de secteur inférieur ou égal à 60°, avantageusement inférieur ou égal à 40° et par exemple inférieur ou égal à 20°, et de telle sorte que, lorsque la bouilloire est renversée et que la poignée de préhension et un deuxième côté latéral du contenant reposent de manière stable sur une surface horizontale, le deuxième orifice d'admission de vapeur est situé au-dessus du niveau d'eau dans le volume interne et est localisé dans un deuxième secteur angulaire centré sur l'axe central du contenant et comportant un premier côté et un deuxième côté disposés de part et d'autre d'un deuxième plan vertical contenant l'axe central du contenant et de manière symétrique par rapport au deuxième plan vertical, le deuxième secteur angulaire ayant un deuxième angle de secteur inférieur ou égal à 60°, avantageusement inférieur ou égal à 40° et par exemple inférieur ou égal à 20°,.

Encore en d'autres termes, la bouilloire est configurée de telle sorte que, lorsque la bouilloire est renversée et que la poignée de préhension et un premier côté latéral du contenant reposent de manière stable sur une surface horizontale, le premier orifice d'admission de vapeur est situé au-dessus du niveau d'eau dans le volume interne et est localisé en un premier emplacement qui est décalé angulairement par rapport à l'horizontale et autour de l'axe central du contenant d'un premier angle compris entre 60° et 120°, avantageusement compris entre 70 et 110° et par exemple compris entre 80 et 100°, et de telle sorte que, lorsque la bouilloire est renversée et que la poignée de préhension et un deuxième côté latéral du contenant reposent de manière stable sur une surface horizontale, le deuxième orifice d'admission de vapeur est situé au-dessus du niveau d'eau dans le volume interne et est localisé en un deuxième emplacement qui est décalé angulairement par rapport à l'horizontale et autour de l'axe central du contenant d'un deuxième angle compris entre 60° et 120°, avantageusement compris entre 70 et 110° et par exemple compris entre 80 et 100°.

Un tel positionnement des premier et deuxième orifices d'admission de vapeur permet d'éloigner ces derniers le plus possible du niveau d'eau lorsque la bouilloire est basculée et que la poignée de préhension et un côté latéral du contenant reposent par exemple sur un plan de travail. Ainsi, la bouilloire selon la présente invention permet d'éviter ou du moins de limiter considérablement les risques d'écoulement d'eau bouillante hors de la bouilloire en cas de renversement de cette dernière.

En outre, le fait que la vapeur générée dans le volume interne soit évacuée à l'extérieur du volume interne via des premier et deuxième tubes d'écoulement de vapeur permet de pouvoir simplifier la conception du couvercle et d'optimiser le positionnement des premier et deuxième orifices d'admission de vapeur et des première et deuxième ouvertures de sortie de vapeur, et ce en particulier en raison du fait que les premier et deuxième tubes d'écoulement de vapeur peuvent se superposer et/ou s'entrelacer.

La bouilloire peut en outre présenter une ou plusieurs des caractéristiques suivantes, prises seules ou en combinaison.

Selon un mode de réalisation de l'invention, les premier et deuxième tubes d'écoulement de vapeur sont logés dans la chambre interne délimitée par le couvercle.

Selon un mode de réalisation de l'invention, les premier et deuxième orifices d'admission de vapeur sont configurés pour être disposés de manière symétrique par rapport au plan vertical médian de la bouilloire.

Selon un mode de réalisation de l'invention, les première et deuxième ouvertures de sortie de vapeur sont configurées pour être disposées de part et d'autre du plan vertical médian de la bouilloire, et par exemple de manière symétrique par rapport au plan vertical médian de la bouilloire.

Selon un mode de réalisation de l'invention, les premier et deuxième orifices d'admission de vapeur sont situés dans une moitié avant de la face inférieure du couvercle.

Selon un mode de réalisation de l'invention, les première et deuxième ouvertures de sortie de vapeur sont situées dans une partie arrière de la chambre interne. Une telle disposition des première et deuxième ouvertures de sortie de vapeur limite les risques d'écoulement d'eau dans le couvercle (via les premier et deuxième orifices d'admission de vapeur et les premier et deuxième tubes d'écoulement de vapeur) lorsqu'un utilisateur verse de l'eau bouillante dans un récipient en inclinant vers l'avant et vers le bas la bouilloire.

Selon un mode de réalisation de l'invention, les première et deuxième ouvertures de sortie de vapeur sont configurées pour être orientées à l'opposé du bec verseur, c'est-à-dire vers l'arrière de la bouilloire. Ces dispositions limitent encore les risques d'écoulement d'eau dans le couvercle (via les premier et deuxième orifices d'admission de vapeur et les premier et deuxième tubes d'écoulement de vapeur) lorsqu'un utilisateur verse de l'eau bouillante dans un récipient en inclinant vers l'avant et vers le bas la bouilloire.

Selon un mode de réalisation de l'invention, chacun des premier et deuxième tubes d'écoulement de vapeur présente une forme générale de L.

Selon un mode de réalisation de l'invention, les premier et deuxième tubes d'écoulement de vapeur sont configurés pour s'étendre sensiblement horizontalement lorsque le contenant repose sur une surface horizontale.

Selon un autre mode de réalisation de l'invention, le premier tube d'écoulement de vapeur est configuré pour être incliné par rapport à l'horizontale lorsque le contenant repose sur une surface horizontale, de manière à guider de l'eau contenue dans le premier tube d'écoulement de vapeur vers le premier orifice d'admission de vapeur, et le deuxième tube d'écoulement de vapeur est configuré pour être incliné par rapport à l'horizontale lorsque le contenant repose sur une surface horizontale, de manière à guider de l'eau contenue dans le deuxième tube d'écoulement de vapeur vers le deuxième orifice d'admission de vapeur. Ces dispositions limitent les risques d'accumulation d'eau et de stagnation d'eau dans le couvercle.

Selon un mode de réalisation de l'invention, le premier tube d'écoulement de vapeur comporte une première portion de tube primaire reliée fluidiquement au premier orifice d'admission de vapeur et une deuxième portion de tube primaire s'étendant depuis la première portion de tube primaire, la deuxième portion de tube primaire étant courbée vers l'arrière de la bouilloire, et le deuxième tube d'écoulement de vapeur comporte une première portion de tube secondaire reliée fluidiquement au deuxième orifice d'admission de vapeur et une deuxième portion de tube secondaire s'étendant depuis la première portion de tube secondaire, la deuxième portion de tube secondaire étant courbée vers l'arrière de la bouilloire. Ces dispositions limitent encore les risques d'écoulement d'eau dans le couvercle (via les premier et deuxième orifices d'admission de vapeur et les premier et deuxième tubes d'écoulement de vapeur) lorsqu'un utilisateur verse de l'eau bouillante dans un récipient en inclinant vers l'avant et vers le bas la bouilloire.

Selon un mode de réalisation de l'invention, la première portion de tube primaire comporte une première extrémité reliée fluidiquement au premier orifice d'admission de vapeur et une deuxième extrémité opposée au premier orifice d'admission de vapeur, la deuxième extrémité de la première portion de tube primaire étant décalée angulairement du deuxième orifice d'admission de vapeur par rapport à l'axe central du contenant d'un premier angle de décalage inférieur ou égal à 20° et par exemple inférieur ou égal à 10°.

En d'autres termes, la première portion de tube primaire s'étend depuis le premier orifice d'admission de vapeur jusqu'à proximité du deuxième orifice d'admission de vapeur. Une telle configuration du premier tube d'écoulement de vapeur retarde le plus possible un éventuel passage de l'eau, par le principe des vases, dans la deuxième portion de tube primaire en cas de basculement de la bouilloire.

Selon un mode de réalisation de l'invention, la première portion de tube secondaire comporte une première extrémité reliée fluidiquement au deuxième orifice d'admission de vapeur et une deuxième extrémité opposée au deuxième orifice d'admission de vapeur, la deuxième extrémité de la première portion de tube secondaire étant décalée angulairement du premier orifice d'admission de vapeur par rapport à l'axe central du contenant d'un deuxième angle de décalage inférieur ou égal à 20° et par exemple inférieur ou égal à 10°.Selon un mode de réalisation de l'invention, la première portion de tube primaire et la première portion de tube secondaire sont globalement rectilignes.

En d'autres termes, la première portion de tube secondaire s'étend depuis le deuxième orifice d'admission de vapeur jusqu'à proximité du premier orifice d'admission de vapeur. Une telle configuration du deuxième tube d'écoulement de vapeur retarde le plus possible un éventuel passage de l'eau, par le principe des vases, dans la deuxième portion de tube secondaire en cas de basculement de la bouilloire.

Selon un mode de réalisation de l'invention, la première portion de tube primaire et la première portion de tube secondaire s'étendent respectivement dans un premier plan d'extension et un deuxième plan d'extension qui sont sensiblement perpendiculaires au plan vertical médian de la bouilloire.

Selon un mode de réalisation de l'invention, les premier et deuxième plan d'extension sont sensiblement parallèles l'un par rapport.

Selon un mode de réalisation de l'invention, le circuit d'évacuation de vapeur comporte au moins une ouverture d'évacuation de vapeur, et par exemple une ou plusieurs ouverture(s) d'évacuation de vapeur, prévue sur le couvercle et reliée fluidiquement à la chambre interne délimitée par le couvercle, l'au moins une ouverture d'évacuation de vapeur étant configurée pour permettre une évacuation de la vapeur contenue dans la chambre interne à l'extérieur du couvercle et par exemple vers l'extérieur de la bouilloire.

Selon un mode de réalisation de l'invention, l'au moins une ouverture d'évacuation de vapeur débouche dans une surface périphérique externe du couvercle.

Selon un mode de réalisation de l'invention, l'au moins une ouverture d'évacuation de vapeur est configurée pour être située à proximité du bec verseur, et par exemple en regard du bec verseur.

Selon un mode de réalisation de l'invention, l'au moins une ouverture d'évacuation de vapeur débouche dans une face supérieure du couvercle.

Selon un mode de réalisation de l'invention, le contenant comprend une ouverture de remplissage supérieure débouchant dans le volume interne.

Selon un mode de réalisation de l'invention, le couvercle est configuré pour être agencé au niveau de l'ouverture de remplissage supérieure.

Selon un mode de réalisation de l'invention, le bec verseur est situé au niveau de l'ouverture de remplissage supérieure.

Selon un mode de réalisation de l'invention, la bouilloire comporte en outre un dispositif de fixation configuré pour fixer de manière amovible, c'est-à-dire de manière temporaire et réversible, le couvercle au contenant.

Selon un mode de réalisation de l'invention, le dispositif de fixation comprend au moins un organe de fixation, tel qu'une patte de fixation ou un doigt de fixation, prévu sur le couvercle et au moins un élément de fixation prévu sur le contenant, l'au moins un organe de fixation étant configuré pour occuper une position de fixation dans laquelle l'au moins un organe de fixation est configuré pour coopérer avec l'au moins un élément de fixation de manière à fixer le couvercle au contenant, et une position de libération dans laquelle l'au moins un organe de fixation est configuré pour libérer l'au moins un élément de fixation de telle sorte que le couvercle peut être retiré du contenant.

Selon un mode de réalisation de l'invention, l'au moins un organe de fixation est monté mobile par rapport au couvercle entre la position de fixation et la position de libération.

Selon un mode de réalisation de l'invention, l'au moins un organe de fixation est monté coulissant par rapport au couvercle selon une direction de coulissement. La direction de coulissement peut s'étendre sensiblement perpendiculairement à un axe central du couvercle, et par exemple sensiblement radialement par rapport à l'axe central du couvercle.

Selon un mode de réalisation de l'invention, le dispositif de fixation comporte un organe de rappel configuré pour rappeler l'au moins un organe de fixation dans la position de fixation.

Selon un mode de réalisation de l'invention, le dispositif de fixation comporte un organe d'étanchéité s'étendant autour de l'au moins un organe de fixation et configuré pour coopérer de manière étanche avec une ouverture traversante prévue sur le couvercle et à travers laquelle fait saillie l'au moins un organe de fixation. Une telle configuration dispositif de fixation limite les risques d'écoulement d'eau à travers les ouvertures traversantes, et donc hors de la bouilloire via la chambre interne et l'au moins une ouverture d'évacuation de vapeur.

Selon un mode de réalisation de l'invention, la bouilloire comporte un mécanisme d'actionnement prévu sur le couvercle et configuré pour déplacer l'au moins organe de fixation dans la position de libération lorsque le mécanisme d'actionnement est actionné par un utilisateur.

Selon un mode de réalisation de l'invention, le mécanisme d'actionnement comporte un organe d'actionnement qui est actionnable manuellement par un utilisateur et qui est configuré pour déplacer l'au moins un organe de fixation de la position de fixation à la position de libération, l'organe d'actionnement étant monté mobile entre une première position d'actionnement et une deuxième position d'actionnement, l'organe d'actionnement et l'au moins un organe de fixation étant configurés de telle sorte qu'un déplacement de l'organe d'actionnement de la première position d'actionnement à la deuxième position d'actionnement entraîne un déplacement de l'au moins un organe de fixation de la position de fixation à la position de libération. Une telle configuration du mécanisme d'actionnement permet à un utilisateur de pouvoir déposer le couvercle par un simple actionnement du mécanisme d'actionnement.

Selon un mode de réalisation de l'invention, le mécanisme d'actionnement comporte un élément de rappel, tel qu'un ressort de rappel, configuré pour rappeler l'organe d'actionnement dans la première position d'actionnement.

Selon un mode de réalisation de l'invention, l'organe d'actionnement est monté mobile en rotation par rapport au couvercle autour d'un axe d'actionnement. L'axe d'actionnement peut par exemple est sensiblement parallèle à l'axe central du contenant lorsque le couvercle est fixé au contenant.

Selon un mode de réalisation de l'invention, l'organe d'actionnement comporte au moins une surface de came sur laquelle une partie de l'au moins un organe de fixation est en contact.

Selon un mode de réalisation de l'invention, la partie de l'au moins un organe de fixation, qui est en contact sur l'au moins une surface de came, est un ergot qui est prévu sur l'au moins un organe de fixation.

Selon un mode de réalisation de l'invention, l'ergot est en contact glissant sur l'au moins une surface de came de telle sorte que, lorsque l'organe d'actionnement est déplacé entre la première position d'actionnement et la deuxième position d'actionnement, l'ergot se déplace par rapport à l'organe d'actionnement en glissant sur l'au moins une surface de came et entraîne un déplacement de l'au moins un organe de fixation de la position de fixation à la position de libération.

Selon un mode de réalisation de l'invention, l'organe d'actionnement comporte une partie de poignée configurée pour être manipulée par un utilisateur, et une partie d'actionnement logée dans le couvercle et configurée pour coopérer avec l'au moins un organe de fixation.

Selon un autre mode de réalisation de l'invention, le dispositif de fixation comporte :
- une partie de fixation annulaire configurée pour être agencée au niveau de l'ouverture de remplissage supérieure, la partie de fixation annulaire comportant un joint d'étanchéité annulaire configuré pour coopérer de manière étanche avec l'ouverture de remplissage supérieure,
- au moins un organe de verrouillage, tel qu'une encoche de verrouillage, prévu sur la partie de fixation annulaire, et
- au moins un élément de verrouillage, tel qu'un doigt de verrouillage, prévu sur le couvercle et configuré pour coopérer avec l'au moins un organe de verrouillage, de manière à fixer la partie de fixation annulaire et le couvercle au contenant.

Selon un mode de réalisation de l'invention, la bouilloire comporte un dispositif d'indexage angulaire, également nommé dispositif de détrompage, configuré pour définir une unique position de fixation du couvercle sur le contenant ou une unique position de fixation de la partie de fixation annulaire sur le contenant.

Selon un mode de réalisation de l'invention, la partie de fixation annulaire comporte un corps de support qui est annulaire et auquel est fixé le joint d'étanchéité annulaire, l'au moins un organe de verrouillage étant prévu sur le corps de support.

Selon un mode de réalisation de l'invention, la partie de fixation annulaire comporte en outre une bague de verrouillage logée au moins en partie dans le corps de support, la bague de verrouillage étant montée mobile en rotation par rapport au corps de support autour d'un axe de rotation sensiblement coaxial à un axe central du corps de support et entre une première position de bague et une deuxième position de bague, le dispositif de fixation étant configuré de telle sorte qu'un déplacement de la bague de verrouillage de la première position de bague à la deuxième position de bague entraîne une expansion du joint d'étanchéité annulaire de manière à verrouiller la partie de fixation annulaire sur le contenant.

Selon un mode de réalisation de l'invention, la bague de verrouillage est configurée pour être déplacée dans la deuxième position de bague par l'au moins un élément de verrouillage lors de la coopération de l'au moins un élément de verrouillage avec l'au moins un organe de verrouillage, et en particulier lorsque le couvercle repose sur le corps de support et est pivoté autour de l'axe central du corps de support.

Selon un mode de réalisation de l'invention, le corps de support est configuré pour reposer sur un bord supérieur du contenant délimitant l'ouverture de remplissage supérieure.

Selon un mode de réalisation de l'invention, la partie de fixation annulaire est amovible.

Selon encore un autre mode de réalisation de l'invention, le dispositif de fixation pourrait être un dispositif de fixation à baïonnette comprenant plusieurs organes de liaison prévus sur le contenant et répartis autour de l'axe central du contenant, et plusieurs éléments de liaison prévus sur le couvercle et configurés pour coopérer respectivement avec les organes de liaison.

Selon un mode de réalisation de l'invention, le couvercle comporte un conduit de versage configuré pour convoyer vers le bec verseur de l'eau contenue dans le volume interne, la bouilloire comprenant un obturateur monté mobile sur le couvercle entre une position de fermeture dans laquelle l'obturateur obture le conduit de versage et empêche un écoulement d'eau à travers le conduit de versage et une position d'ouverture dans laquelle l'obturateur libère le conduit de versage et autorise un écoulement d'eau à travers le conduit de versage. Une telle configuration du couvercle limite considérablement les risques d'écoulement d'eau à travers le bec verseur lorsque la bouilloire est renversée.

Selon un mode de réalisation de l'invention, la bouilloire comporte un système d'actionnement prévu sur le couvercle et configuré pour déplacer l'obturateur entre la position d'ouverture et la position de fermeture.

Selon un mode de réalisation de l'invention, le système d'actionnement comporte un bouton d'actionnement actionnable par un utilisateur et mobile entre une première position de bouton et une deuxième position de bouton, le système d'actionnement étant configuré de telle sorte qu'un déplacement, par un utilisateur, du bouton d'actionnement de la première position de bouton à la deuxième position de bouton entraîne un déplacement de l'obturateur de la position de fermeture à la position d'ouverture.

Selon un mode de réalisation de l'invention, le système d'actionnement comporte un élément d'actionnement, tel qu'un levier d'actionnement, monté mobile, et par exemple monté pivotant autour d'un axe de pivotement, par rapport au couvercle et entre une première position d'actionnement et une deuxième position d'actionnement, le système d'actionnement et l'obturateur étant configurés de telle sorte qu'un déplacement du bouton d'actionnement de la première position de bouton à la deuxième position de bouton entraîne un déplacement de l'obturateur de la position de fermeture à la position d'ouverture.

Selon un mode de réalisation de l'invention, l'obturateur est solidaire en mouvement de l'élément d'actionnement.

Selon un mode de réalisation de l'invention, l'obturateur, l'élément d'actionnement et le bouton d'actionnement sont réalisés en une seule pièce.

Selon un mode de réalisation de l'invention, le système d'actionnement pourrait comporter, à la place de l'élément d'actionnement, un dispositif de commande bistable, par exemple du type stylo à bille.

Selon un mode de réalisation de l'invention, le système d'actionnement comporte un élément de sollicitation, tel qu'un ressort de sollicitation, configuré pour solliciter l'obturateur vers la position de fermeture.

Selon un mode de réalisation de l'invention, le conduit de versage comporte une ouverture d'entrée d'eau débouchant dans la face inférieure du couvercle et une ouverture de sortie d'eau débouchant dans une surface périphérique externe du couvercle.

Selon un mode de réalisation de l'invention, l'au moins une ouverture d'évacuation de vapeur est située à proximité de l'ouverture de sortie d'eau.

Selon un mode de réalisation de l'invention, le couvercle comporte le bec verseur.

Selon un mode de réalisation de l'invention, le contenant comporte le bec verseur.

Selon un mode de réalisation de l'invention, la partie de fixation annulaire comporte le bec verseur.

Selon un mode de réalisation de l'invention, le premier tube d'écoulement de vapeur présente une section de passage qui est sensiblement constante le long de la longueur du premier tube d'écoulement de vapeur, et le deuxième tube d'écoulement de vapeur présente une section de passage qui est sensiblement constante le long de la longueur du premier tube d'écoulement de vapeur.

Selon un mode de réalisation de l'invention, chacun des premier et deuxième tubes d'écoulement de vapeur présente une section transversale qui est sensiblement circulaire.

Selon un mode de réalisation de l'invention, chacun des premier et deuxième tubes d'écoulement de vapeur est flexible.

Selon un mode de réalisation de l'invention, le contenant comporte un fond chauffant situé sous le volume interne et configuré pour chauffer l'eau contenue dans le volume interne. De façon avantageuse, le fond chauffant loge un élément électrique chauffant.

Selon un mode de réalisation de l'invention, la bouilloire comporte un dispositif de contrôle électromécanique comportant un élément bimétallique, l'au moins une ouverture d'évacuation de vapeur étant configurée pour diriger la vapeur contenue dans la chambre interne vers l'élément bimétallique, le dispositif de contrôle électromécanique étant configuré de telle sorte qu'un afflux de vapeur sur l'élément bimétallique déclenche un arrêt de la chauffe de la bouilloire.

Selon un mode de réalisation de l'invention, la bouilloire comporte une base de support sur laquelle est destiné à reposer le contenant.

### Brève description des figures

L'invention sera mieux comprise à l'aide de la description qui suit en référence aux dessins schématiques annexés représentant, à titre d'exemples non limitatifs, plusieurs formes d'exécution de cette bouilloire.
Figure 1 est une vue en perspective de dessus d'une bouilloire selon un premier mode de réalisation de l'invention.
Figure 2 est une vue en perspective de dessus d'un contenant de la bouilloire de la figure 1.
Figure 3 est une vue en perspective de dessus d'un couvercle de la bouilloire de la figure 1.
Figure 4 est une vue en perspective de côté du couvercle de la figure 3.
Figure 5 est une vue en perspective de dessous du couvercle de la figure 3.
Figure 6 est une vue partielle en perspective de dessus du couvercle de la figure 3 dans laquelle un capot supérieur du couvercle a été retiré.
Figure 7 est une vue en perspective de dessus d'une partie de fixation annulaire de la bouilloire de la figure 1.
Figure 8 est une vue partielle en perspective de dessus de la partie de fixation annulaire de la figure 7.
Figure 9 est une vue partielle de côté de la bouilloire de la figure 1 montrant la bouilloire renversée sur une surface horizontale et occupant une position stable dans laquelle une poignée de préhension de la bouilloire et le côté latéral droit du contenant prennent appui sur la surface horizontale.
Figure 10 est une vue partielle de côté de la bouilloire de la figure 1 montrant la bouilloire renversée sur une surface horizontale et occupant une position stable dans laquelle une poignée de préhension de la bouilloire et le côté latéral droit du contenant prennent appui sur la surface horizontale.
Figure 11 est une vue partielle de côté de la bouilloire de la figure 1 montrant la bouilloire renversée sur une surface horizontale et occupant une position stable dans laquelle une poignée de préhension de la bouilloire et le côté latéral gauche du contenant prennent appui sur la surface horizontale.
Figure 12 est une vue en perspective de dessus d'une bouilloire selon un deuxième mode de réalisation de l'invention.
Figure 13 est une vue en perspective de dessus d'un contenant de la bouilloire de la figure 12.
Figure 14 est une vue en perspective de dessus d'un couvercle de la bouilloire de la figure 12.
Figure 15 est une vue en perspective de dessous du couvercle de la figure 14.
Figure 16 est une vue en perspective de dessous du couvercle de la figure 14 dans laquelle un boîtier inférieur du couvercle a été retiré.
Figure 17 est une vue en perspective de dessous d'un mécanisme d'actionnement et de deux organes de fixation prévus sur le couvercle de la figure 14.
Figure 18 est une vue en perspective de dessus de l'un des organes de fixation de la figure 17.
Figure 19 est une vue en perspective de dessous du mécanisme d'actionnement de la figure 17.
Figure 20 est une vue en perspective de dessus du couvercle de la figure 14 dans laquelle un capot supérieur du couvercle a été retiré.
Figure 21 est une vue partielle de côté de la bouilloire de la figure 12 montrant la bouilloire renversée sur une surface horizontale et occupant une position stable dans laquelle une poignée de préhension de la bouilloire et le côté latéral gauche du contenant prennent appui sur la surface horizontale.
Figure 22 est une vue partielle de côté de la bouilloire de la figure 12 montrant la bouilloire renversée sur une surface horizontale et occupant une position stable dans laquelle une poignée de préhension de la bouilloire et le côté latéral droit du contenant prennent appui sur la surface horizontale.

### Description détaillée

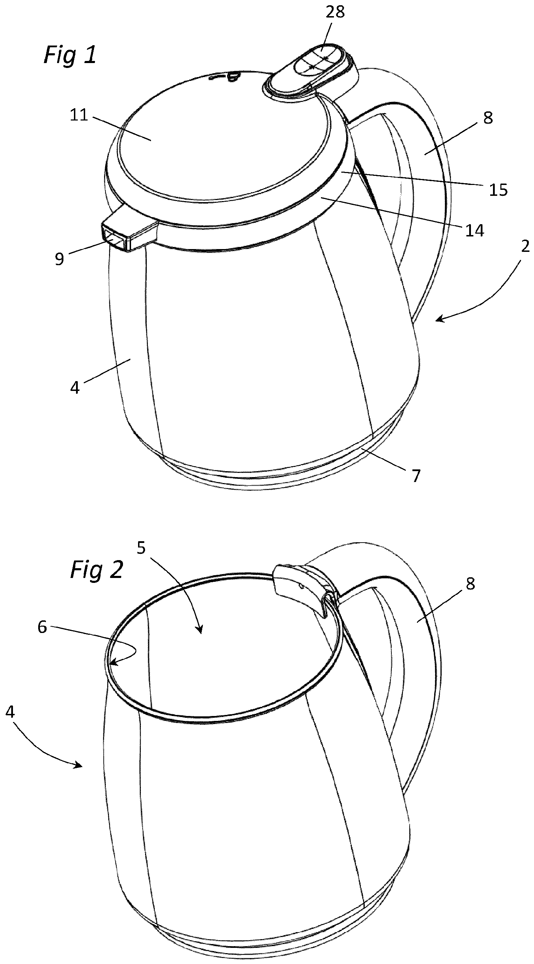

Les figures 1 à 11 représentent une bouilloire 2, et en particulier une bouilloire électrique, selon un premier mode de réalisation de l'invention.

La bouilloire 2 comporte une base de support (non visible sur les figures) configuré pour être alimentée électriquement par un cordon d'alimentation (non représenté sur les figures), et un contenant 4 configuré pour reposer sur la base de support.

Le contenant 4 présente un axe central A configuré pour s'étendre sensiblement verticalement lorsque le contenant 4 repose sur une surface horizontale. De façon avantageuse, le contenant 4 présente une forme générale de révolution autour de l'axe central A.

Le contenant 4 délimite un volume interne 5 destiné à contenir de l'eau et dans lequel l'eau est destinée à être chauffée et notamment portée à ébullition. Le contenant 4 comprend en outre une ouverture de remplissage supérieure 6 débouchant dans le volume interne 5.

Le contenant 4 comporte de plus un fond chauffant 7 situé sous le volume interne 5 et configuré pour chauffer l'eau contenue dans le volume interne 5. De façon connue, le fond chauffant 7 loge un élément électrique chauffant (non représenté sur les figures) configuré pour être alimenté électriquement lorsque le contenant 4 repose sur la base de support.

La bouilloire 2 comporte en outre une poignée de préhension 8 fixée au contenant 4, et un bec verseur 9 situé à l'opposé de la poignée de préhension 8 par rapport à l'axe central A du contenant 4. Le bec verseur 9 peut par exemple être situé au niveau de l'ouverture de remplissage supérieure 6.

La bouilloire 2 comporte en outre un couvercle 11 configuré pour fermer le contenant 4 et pourvu d'une face inférieure 12 configurée pour être située en regard du volume interne 5 du contenant 4.

La bouilloire 2 comporte de plus un dispositif de fixation configuré pour fixer de manière amovible, c'est-à-dire de manière temporaire et réversible, le couvercle 11 au contenant 4.

Selon le mode de réalisation représenté sur les figures 1 à 11, le dispositif de fixation comporte une partie de fixation annulaire 14 qui est amovible et qui est configurée pour être agencée au niveau de l'ouverture de remplissage supérieure 6. La partie de fixation annulaire 14 comporte un corps de support 15 qui est annulaire et qui est configuré pour reposer sur un bord supérieur du contenant 4, et un joint d'étanchéité annulaire 16 fixé au corps de support 15 et configuré pour coopérer de manière étanche avec l'ouverture de remplissage supérieure 6. Selon le mode de réalisation représenté sur les figures 1 à 11, le bec verseur 9 est prévu sur le corps de support 15.

Le dispositif de fixation comporte en outre plusieurs organes de verrouillage 17, tels que des encoches de verrouillage, prévus sur le corps de support 15 et répartis autour d'un axe central du corps de support 15, et plusieurs éléments de verrouillage 18, tels que des doigts de verrouillage, prévus sur une surface périphérique externe du couvercle 11 et configurés pour coopérer avec les organes de verrouillage 17, de manière à fixer le couvercle 11 à la partie de fixation annulaire 14.

De façon avantageuse, les organes de verrouillage 17 et les éléments de verrouillage 18 forment un système de fixation à baïonnette, et le dispositif de fixation est donc configuré de telle sorte qu'une fixation du couvercle 11 sur la partie de fixation annulaire 14 comporte une première phase de fixation durant laquelle le couvercle 11 est positionné dans une position angulaire prédéterminée par rapport à la partie de fixation annulaire 14, une deuxième phase de fixation durant laquelle le couvercle 11 est déplacé en direction de la partie de fixation annulaire 14 selon une direction de déplacement qui est sensiblement parallèle à l'axe central A du contenant 4, et une troisième phase de fixation durant laquelle le couvercle 11 est entraîné en rotation autour d'un axe de rotation qui est sensiblement parallèle à l'axe central A du contenant 4.

Selon le mode de réalisation représenté sur les figures 1 à 11, le couvercle 11 est configuré pour recouvrir le corps de support 15 et reposer sur ce dernier, et également pour obturer de manière étanche une ouverture centrale 19 délimitée par le corps de support 15. De façon avantageuse, la bouilloire 2 comporte un élément d'étanchéité 21 fixé à la face inférieure 12 du couvercle 11 et configuré pour coopérer de manière étanche avec un épaulement annulaire 22 prévu sur une surface circonférentielle interne du corps de support 15.

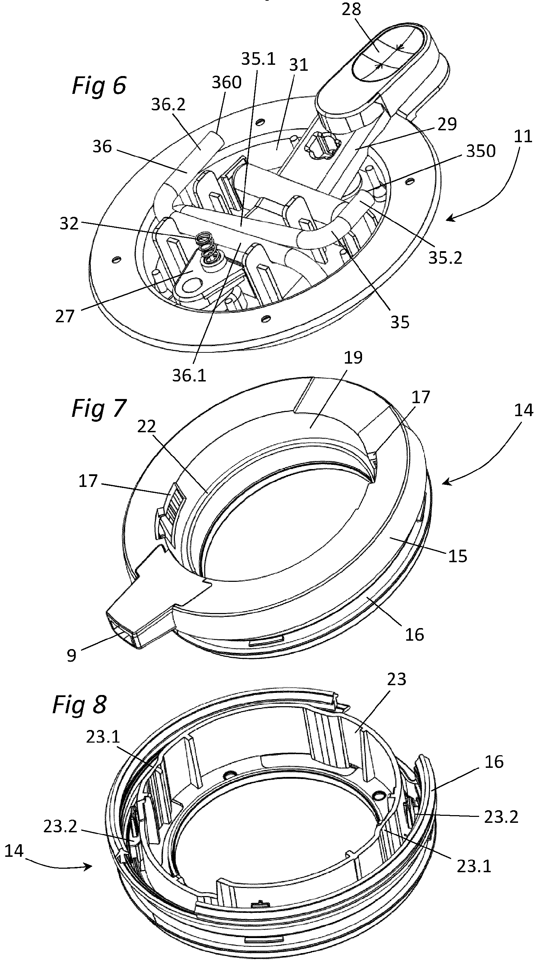

Selon le mode de réalisation représenté sur les figures 1 à 11, la partie de fixation annulaire 14 comporte en outre une bague de verrouillage 23 (voir la figure 8) logée au moins en partie dans le corps de support 15. La bague de verrouillage 23 est montée mobile en rotation par rapport au corps de support 15 autour d'un axe de rotation sensiblement coaxial à un axe central du corps de support 15 et entre une première position de bague et une deuxième position de bague. Le dispositif de fixation est configuré de telle sorte qu'un déplacement de la bague de verrouillage 23 de la première position de bague à la deuxième position de bague entraîne une expansion du joint d'étanchéité annulaire 16, c'est-à-dire une augmentation des dimensions externes du joint d'étanchéité annulaire 16, de manière à verrouiller la partie de fixation annulaire 14 sur le contenant 4. A cet effet, la bague de verrouillage 23 peut par exemple être pourvue de plusieurs empreintes de réception 23.1 prévues sur une surface circonférentielle externe de la bague de verrouillage 23 et réparties autour d'un axe central de la bague de verrouillage 23. Chaque empreinte de réception 23.1 est plus particulièrement configurée pour loger un élément de déformation 23.2 respectif, interposé entre le joint d'étanchéité annulaire 16 et la bague de verrouillage 23, lorsque la bague de verrouillage 23 est dans la première position de bague, et pour être décalée angulairement de l'élément de déformation 23.2 respectif lorsque la bague de verrouillage 23 est dans la deuxième position de bague de telle sorte que l'élément de déformation 23.2 respectif, qui est situé hors de ladite empreinte de réception 23.1, exerce un effort radial, orienté vers l'extérieur, contre le joint d'étanchéité annulaire 16 et déforme ce dernier.

La bague de verrouillage 23 est plus particulièrement configurée pour être déplacée entre la première position de bague et la deuxième position de bague par les éléments de verrouillage 18 prévus sur le couvercle 11 lorsque le couvercle 11 repose sur le corps de support 15 et est pivoté autour de l'axe central du corps de support 15. A cet effet, la bague de verrouillage 23 peut par exemple comporter des surfaces de butée contre lesquelles sont destinés à venir en butée les éléments de verrouillage 18 lorsque le couvercle 11 est pivoté autour de l'axe central du corps de support 15.

Selon le mode de réalisation représenté sur les figures 1 à 11, le couvercle 11 comporte un conduit de versage 24 configuré pour convoyer vers le bec verseur 9 de l'eau contenue dans le volume interne 5. Le conduit de versage 24 comporte plus particulièrement une ouverture d'entrée d'eau 25 débouchant dans la face inférieure 12 du couvercle 11, et une ouverture de sortie d'eau 26 débouchant dans une surface périphérique externe du couvercle 11 et destinée à être située sensiblement en regard du bec verseur 9 lorsque le couvercle 11 est fixé au contenant 4.

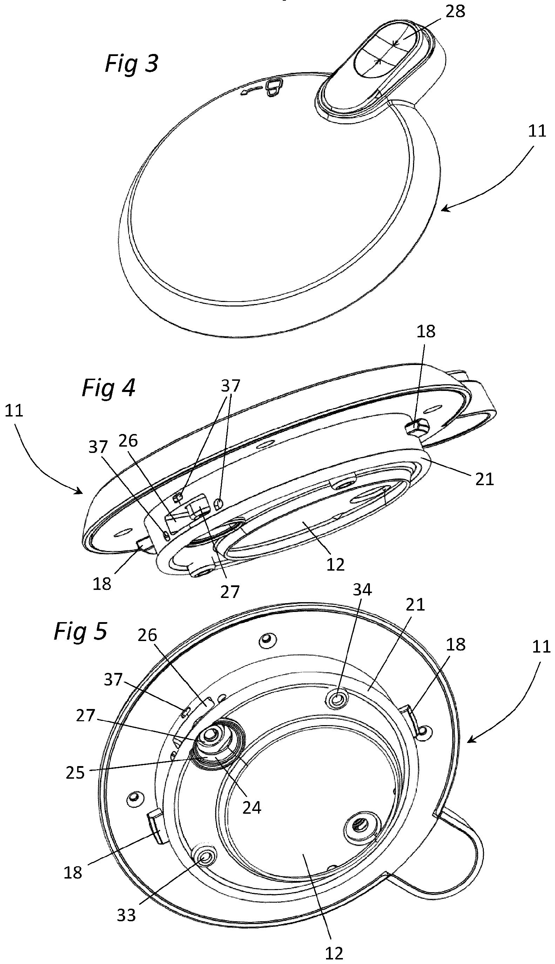

La bouilloire 2 comprend en outre un obturateur 27 (voir les figures 4 à 6) monté mobile sur le couvercle 11 entre une position de fermeture dans laquelle l'obturateur 27 obture le conduit de versage 24 et empêche un écoulement d'eau à travers le conduit de versage 24, et une position d'ouverture dans laquelle l'obturateur 27 libère le conduit de versage 24 et autorise un écoulement d'eau à travers le conduit de versage 24.

La bouilloire 2 comporte de plus un système d'actionnement prévu sur le couvercle 11 et configuré pour déplacer l'obturateur 27 entre la position d'ouverture et la position de fermeture. Selon le mode de réalisation représenté sur les figures 1 à 11, le système d'actionnement comporte un bouton d'actionnement 28 actionnable par un utilisateur et mobile entre une première position de bouton et une deuxième position de bouton, le système d'actionnement étant configuré de telle sorte qu'un déplacement, par un utilisateur, du bouton d'actionnement 28 de la première position de bouton à la deuxième position de bouton entraîne un déplacement de l'obturateur 27 de la position de fermeture à la position d'ouverture.

Le système d'actionnement comporte également un levier d'actionnement 29 (voir la figure 6) monté pivotant sur le couvercle 11 autour d'un axe de pivotement et entre une première position d'actionnement et une deuxième position d'actionnement. Le levier d'actionnement 29 peut par exemple être logé dans une chambre interne 31 délimitée par le couvercle 11. Le système d'actionnement et l'obturateur 27 sont configurés de telle sorte qu'un déplacement du bouton d'actionnement 28 de la première position de bouton à la deuxième position de bouton entraîne un déplacement de l'obturateur 27 de la position de fermeture à la position d'ouverture, et autorise donc un écoulement d'eau hors de la bouilloire 2 via le conduit de versage 24 et le bec verseur 9.

Selon le mode de réalisation représenté sur les figures 1 à 11, le levier d'actionnement 29 est monostable, et le système d'actionnement comporte un élément de sollicitation 32, tel qu'un ressort de sollicitation logé dans la chambre interne 31 et prenant appui d'une part sur le couvercle 11 et d'autre part sur l'obturateur 27, configuré pour solliciter l'obturateur 27 vers la position de fermeture. Une telle configuration du système d'actionnement permet de maintenir le conduit de versage 24 obturé lorsqu'aucune pression n'est exercée par un utilisateur sur le bouton d'actionnement 28.

Selon le mode de réalisation représenté sur les figures 1 à 11, l'obturateur 27, le levier d'actionnement 29 et le bouton d'actionnement 28 sont réalisés en une seule pièce. Cependant, l'obturateur 27, le levier d'actionnement et le bouton d'actionnement 28 pourraient être distincts et être reliés mécaniquement entre eux.

La bouilloire 2 pourrait également comporter un panier à thé (non représenté sur les figures) configuré pour reposer sur l'épaulement annulaire 22 prévu sur le corps de support 15 et pour être disposé dans le volume interne 5 du contenant 4. Lorsque le panier à thé est utilisé, l'élément d'étanchéité 21 fixé à la face inférieure 12 du couvercle 11 est alors configuré pour coopérer de manière étanche avec un rebord périphérique supérieur du panier à thé.

La bouilloire 2 comporte également un circuit d'évacuation de vapeur configuré pour convoyer, à l'extérieur du volume interne 5 et par exemple vers l'extérieur de la bouilloire 2, de la vapeur générée dans le volume interne 5 lors d'une ébullition de l'eau contenue dans le volume interne 5.

Le circuit d'évacuation de vapeur comprend notamment un premier orifice d'admission de vapeur 33 et un deuxième orifice d'admission de vapeur 34 qui sont prévus sur le couvercle 11 et qui débouchent dans la face inférieure 12 du couvercle 11 et à proximité d'un bord périphérique de la face inférieure 12 du couvercle 11. Lorsque le couvercle 11 est fixé au contenant 4 et que ce dernier repose sur une surface horizontale, les premier et deuxième orifices d'admission de vapeur 33, 34 débouchent dans le volume interne 5 délimité par le contenant 4 et au-dessus d'un niveau de remplissage maximal du contenant 4.

Selon le mode de réalisation représenté sur les figures 1 à 11, les premier et deuxième orifices d'admission de vapeur 33, 34 sont disposés de part et d'autre d'un plan vertical médian P de la bouilloire 2 qui passe par le bec verseur 9 et la poignée de préhension 8, et sont avantageusement disposés de manière symétrique par rapport au plan vertical médian P de la bouilloire 2.

Selon le mode de réalisation représenté sur les figures 1 à 11, les premier et deuxième orifices d'admission de vapeur 33, 34 sont situés dans une moitié avant de la face inférieure 12 du couvercle 11.

Comme montré plus particulièrement sur la figure 6, le circuit d'évacuation de vapeur comprend également un premier tube d'écoulement de vapeur 35 comprenant une première ouverture d'entrée de vapeur reliée fluidiquement au premier orifice d'admission de vapeur 33 et une première ouverture de sortie de vapeur 350 débouchant dans la chambre interne 31 délimitée par le couvercle 11, et un deuxième tube d'écoulement de vapeur 36 comprenant une deuxième ouverture d'entrée de vapeur reliée fluidiquement au deuxième orifice d'admission de vapeur 34 et une deuxième ouverture de sortie de vapeur 360 débouchant dans la chambre interne 31. De façon avantageuse, les premier et deuxième tubes d'écoulement de vapeur 35, 36 sont logés dans la chambre interne 31, et présentent chacun une section transversale qui est circulaire. De façon avantageuse, chacun des premier et deuxième tubes d'écoulement de vapeur 35, 36 présente une section de passage qui est sensiblement constante le long de sa longueur.

On entend par tube d'écoulement de vapeur un conduit d'écoulement de vapeur de préférence monobloc ayant un contour fermé. Un tube d'écoulement comprend généralement un conduit d'écoulement ayant un contour fermé, de préférence monobloc, s'étendant entre un orifice d'entrée de vapeur et un orifice de sortie de vapeur. Un tube d'écoulement est de préférence de section transversale circulaire voire ovale et comprend une paroi périphérique de préférence formée d'un seul tenant de sorte à assurer une étanchéité optimale du tube et éviter tout écoulement de vapeur en dehors du tube lors du déplacement de la vapeur le long du tube à l'intérieur du tube.

Les première et deuxième ouvertures de sortie de vapeur 350, 360 sont plus particulièrement configurées pour être disposées de part et d'autre du plan vertical médian P de la bouilloire 2, et avantageusement pour être disposées de manière symétrique par rapport au plan vertical médian P de la bouilloire 2. Selon le mode de réalisation représenté sur les figures 1 à 11, les première et deuxième ouvertures de sortie de vapeur 350, 360 sont situées dans une partie arrière de la chambre interne 31, et sont configurées pour être orientées à l'opposé du bec verseur 9, c'est-à-dire vers l'arrière de la bouilloire 2 et donc vers la poignée de préhension 8.

Le premier tube d'écoulement de vapeur 35 peut par exemple être configuré pour être incliné par rapport à l'horizontale lorsque le contenant 4 repose sur une surface horizontale, de manière à guider de l'eau contenue dans le premier tube d'écoulement de vapeur 35 vers le premier orifice d'admission de vapeur 33, et de façon similaire le deuxième tube d'écoulement de vapeur 36 peut par exemple être configuré pour être incliné par rapport à l'horizontale lorsque le contenant 4 repose sur une surface horizontale, de manière à guider de l'eau contenue dans le deuxième tube d'écoulement de vapeur 36 vers le deuxième orifice d'admission de vapeur 34.

Selon le mode de réalisation représenté sur les figures 1 à 11, chacun des premier et deuxième tubes d'écoulement de vapeur 35, 36 présente une forme générale de L. Comme montré sur la figure 6, le premier tube d'écoulement de vapeur 35 comporte une première portion de tube primaire 35.1 reliée fluidiquement au premier orifice d'admission de vapeur 33, et une deuxième portion de tube primaire 35.2 qui s'étend depuis la première portion de tube primaire 35.1 et qui est courbée vers l'arrière de la bouilloire 2. De façon similaire, le deuxième tube d'écoulement de vapeur 36 comporte une première portion de tube secondaire 36.1 reliée fluidiquement au deuxième orifice d'admission de vapeur 34, et une deuxième portion de tube secondaire 36.2 qui s'étend depuis la première portion de tube secondaire 36.1 et qui est courbée vers l'arrière de la bouilloire 2.

Selon le mode de réalisation représenté sur les figures 1 à 11, la première portion de tube primaire 35.1 et la première portion de tube secondaire 36.1 sont globalement rectilignes, et s'étendent respectivement dans un premier plan d'extension et un deuxième plan d'extension qui sont sensiblement parallèles l'un par rapport et qui sont sensiblement perpendiculaires au plan vertical médian P de la bouilloire 2 lorsque le couvercle 11 est fixé au contenant 4. De façon avantageuse, la première portion de tube primaire 35.1 s'étend depuis le premier orifice d'admission de vapeur 33 jusqu'au plus près du deuxième orifice d'admission de vapeur 33, et la première portion de tube secondaire 36.1 s'étend depuis le deuxième orifice d'admission de vapeur 34 jusqu'à proximité du premier orifice d'admission de vapeur 33.

Le circuit d'évacuation de vapeur comprend de plus plusieurs ouvertures d'évacuation de vapeur 37 prévues sur le couvercle 11 et reliées fluidiquement à la chambre interne 31 délimitée par le couvercle 11. Les ouvertures d'évacuation de vapeur 37 sont configurées pour permettre une évacuation de la vapeur contenue dans la chambre interne 31 vers l'extérieur de la bouilloire 2.

Selon le mode de réalisation représenté sur les figures 1 à 11, les ouvertures d'évacuation de vapeur 37 débouchent dans une surface périphérique externe du couvercle 11, et sont situées à proximité de l'ouverture de sortie d'eau 26. Les ouvertures d'évacuation de vapeur 37 sont donc configurées pour être situées à proximité du bec verseur 9, et par exemple pour être situées en regard du bec verseur 9, lorsque le couvercle 11 est fixé au contenant 4. Une telle configuration de la bouilloire 2 permet une évacuation de la vapeur hors du contenant 4 via le couvercle 11 et le bec verseur 9.

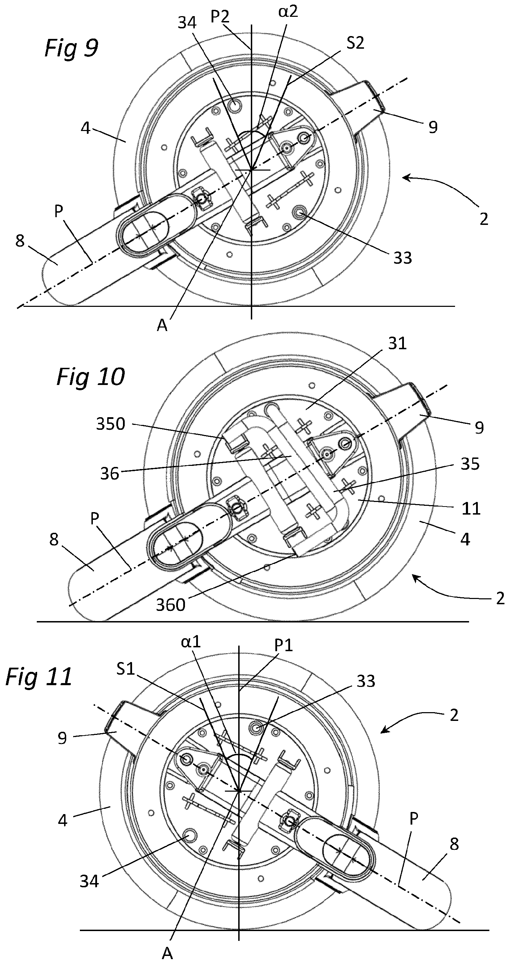

Comme montré plus particulièrement sur les figures 9 à 11, la bouilloire 2 est configurée :
- de telle sorte que, lorsque la bouilloire 2 est renversée et que la poignée de préhension 8 et un premier côté latéral, à savoir le côté gauche, du contenant 4 reposent de manière stable sur une surface horizontale, le premier orifice d'admission de vapeur 33 est situé au-dessus du niveau d'eau dans le volume interne 5 et est localisé dans un premier secteur angulaire S1 qui est centré sur l'axe central A du contenant 4, qui présente un premier angle de secteur α1, également nommé angle au sommet, inférieur ou égal à 40°, et dont une bissectrice est contenue dans un premier plan vertical P1 contenant l'axe central A du contenant 4, et
- de telle sorte que, lorsque la bouilloire 2 est renversée et que la poignée de préhension 8 et un deuxième côté latéral, à savoir le côté droit, du contenant 4 reposent de manière stable sur une surface horizontale, le deuxième orifice d'admission de vapeur 34 est situé au-dessus du niveau d'eau dans le volume interne 5 et est localisé dans un deuxième secteur angulaire S2 qui est centré sur l'axe central A du contenant 4, qui présente un deuxième angle de secteur α2 inférieur ou égal à 40°, et par exemple inférieur ou égal à 20°, et dont une bissectrice est contenue dans un deuxième plan vertical P2 contenant l'axe central A du contenant 4.

Un tel positionnement des premier et deuxième orifices d'admission de vapeur 33, 34 permet d'éloigner ces derniers le plus possible du niveau d'eau lorsque la bouilloire 2 est basculée et que la poignée de préhension 8 et un côté latéral du contenant 4 reposent par exemple sur un plan de travail. Ainsi, la bouilloire 2 selon la présente invention permet d'éviter ou du moins de limiter considérablement les risques d'écoulement d'eau bouillante hors de la bouilloire 2 en cas de renversement de cette dernière.

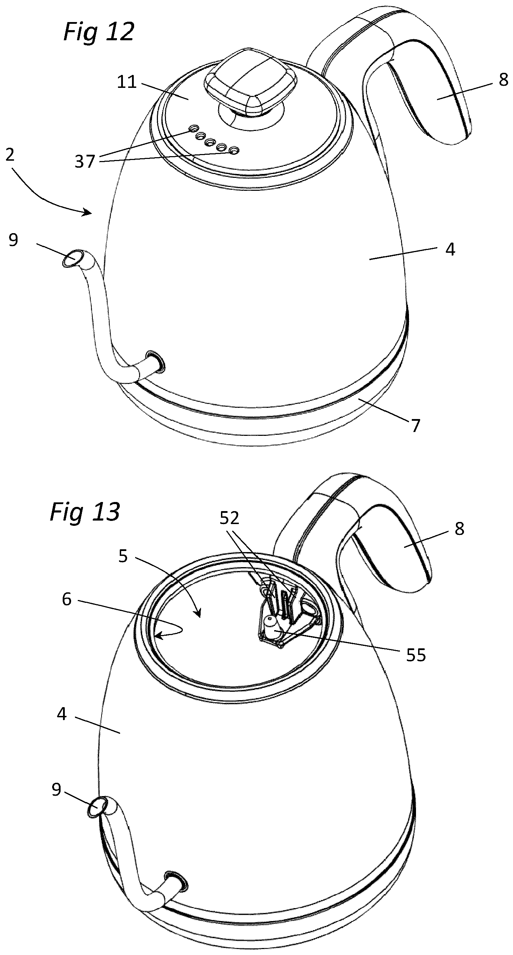

Les figures 12 à 22 représentent une bouilloire 2 selon un deuxième mode de réalisation de l'invention qui diffère du premier mode de réalisation essentiellement en ce que le bec verseur 9 est fixé au contenant 4, et en ce que le couvercle 11 est dépourvu de conduit de versage 24 et est configuré pour être agencé au niveau de l'ouverture de remplissage supérieure 6 et pour reposer directement sur le bord supérieur du contenant 4.

Selon ce deuxième mode de réalisation de l'invention, les ouvertures d'évacuation de vapeur 37 débouchent dans la face supérieure du couvercle 11, de telle sorte que la vapeur est évacuée hors de la bouilloire 2 sans s'écouler à travers le bec verseur 9.

Selon ce deuxième mode de réalisation de l'invention, la chambre interne 31 comporte une première partie de chambre 31.1 dans laquelle sont logés les premier et deuxième tubes d'écoulement de vapeur 35, 36, et une deuxième partie de chambre 31.2 dans laquelle débouchent les ouvertures d'évacuation de vapeur 37. Les première et deuxième parties de chambre 31.1, 31.2 sont séparées l'une de l'autre par une paroi interne 110 du couvercle 11. De façon avantageuse, le circuit d'évacuation de vapeur comporte des trous de passage 40 prévus sur la paroi interne 110 et configurés pour relier fluidiquement la première partie de chambre 31.1 à la deuxième partie de chambre 31.2. Ainsi, la vapeur contenue dans la première partie de chambre 31.1 peut s'écouler vers l'extérieur du couvercle 11 via les trous de passage 41, la deuxième partie de chambre 31.2 et les ouvertures d'évacuation de vapeur 37. Les trous de passage 40 sont par exemple répartis autour de l'axe central du couvercle 11.

Les trous de passage 40 pourraient par exemple être prévus dans une partie arrière du couvercle 11. De ce fait, même si un utilisateur incline fortement la bouilloire 2 pour verser de l'eau hors du contenant 4 et que de l'eau pénètre, par les premier et deuxième tubes d'écoulement de vapeur 35, 36, dans la première partie de chambre 31.1, l'eau ayant pénétrée dans cette dernière se dirige vers l'avant du couvercle 11 et donc à distance des trous de passage 40. Une telle disposition des trous de passage 40 limiterait ainsi les risques d'écoulement d'eau via les ouvertures d'évacuation de vapeur 37 lors d'une opération de versage.

En outre, selon ce deuxième mode de réalisation, le dispositif de fixation comprend deux organes de fixation 41, tels que des doigts de fixation, prévus sur le couvercle 11 et diamétralement opposés. Chaque organe de fixation 41 est logé dans le couvercle 11 et est configuré pour faire saillie hors du couvercle 11 à travers une ouverture traversante 42 respective qui débouche dans une surface périphérique externe du couvercle 11.

Le dispositif de fixation comprend au moins un élément de fixation prévu sur une surface interne du contenant 4 et situé à proximité de l'ouverture de remplissage supérieure 6. Selon le mode de réalisation représenté sur les figures, le dispositif de fixation comporte un unique élément de fixation et ce dernier est formé par un rebord périphérique qui est orienté vers le fond chauffant 7 du contenant 4 et qui délimite en partie l'ouverture de remplissage supérieure 6. Les organes de fixation 41 sont plus particulièrement configurés pour venir en butée contre un bord inférieur du rebord périphérique lorsque le couvercle 11 est fixé au contenant 4. Cependant, selon une variante de réalisation de l'invention, le dispositif de fixation pourrait comporter plusieurs éléments de fixation, et ces derniers pourraient être par exemple des logements de fixation ou des encoches de fixation configurées pour loger respectivement les organes de fixation 41.

Les organes de fixation 41 sont montés coulissants par rapport au couvercle 11 selon une direction de coulissement et entre une position de fixation dans laquelle chaque organe de fixation 41 est configuré pour coopérer avec l'élément de fixation respectif de manière à fixer le couvercle 11 au contenant 4, et une position de libération dans laquelle chaque organe de fixation 41 est configuré pour libérer l'élément de fixation respectif de telle sorte que le couvercle 11 peut être retiré du contenant 4. De façon avantageuse, la direction de coulissement s'étend sensiblement radialement par rapport à un axe central du couvercle 11.

De façon avantageuse, le dispositif de fixation comporte deux organes d'étanchéité 43 s'étendant chacun autour d'un organe de fixation 41 respectif et configurés chacun pour coopérer de manière étanche avec une ouverture traversante 42 respective. Une telle configuration du couvercle 11 limite les risques d'écoulement d'eau à travers les ouvertures traversantes 42, et donc hors de la bouilloire 2 via la chambre interne 31 et les ouvertures d'évacuation de vapeur 37.

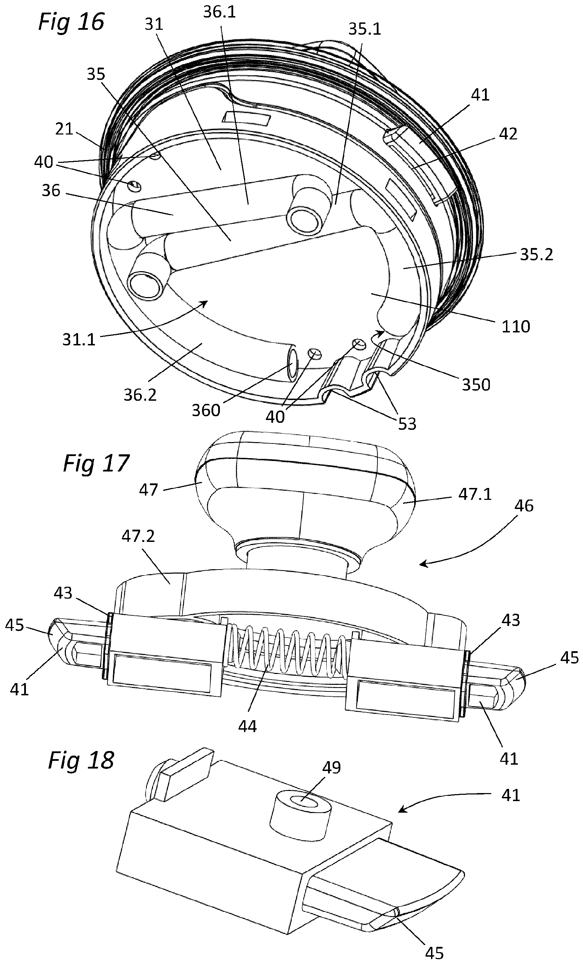

Selon le mode de réalisation représenté sur les figures 12 à 22, le dispositif de fixation comporte un organe de rappel 44 (voir la figure 17) logé dans le couvercle 11 et configuré pour rappeler les organes de fixation 41 dans la position de fixation. De façon avantageuse, chaque organe de fixation 41 comporte une surface inclinée 45, telle qu'un chanfrein d'extrémité, configurée pour coopérer avec le contenant 4 lorsque le couvercle 11 est introduit dans l'ouverture de remplissage supérieure 6, de manière à automatiquement déplacer les organes de fixation 41 dans la position de libération. Une telle configuration du dispositif de fixation permet une fixation aisée du couvercle sur le contenant 4.

Selon le mode de réalisation représenté sur les figures 12 à 22, l'élément d'étanchéité 21 est annulaire, s'étend autour de la surface périphérique externe du couvercle 11 et est configuré pour coopérer de manière étanche avec l'ouverture de remplissage supérieure 6. De façon avantageuse, chaque ouverture traversante 42 débouche dans la surface périphérique externe du couvercle 11 et en dessous de l'élément d'étanchéité 21.

Comme montré plus particulièrement sur la figure 17, la bouilloire 2 comporte un mécanisme d'actionnement 46 prévu sur le couvercle 11 et configuré pour déplacer les organes de fixation 41 dans la position de libération lorsque le mécanisme d'actionnement 46 est actionné par un utilisateur.

Le mécanisme d'actionnement 46 comporte plus particulièrement un organe d'actionnement 47 qui est actionnable manuellement par un utilisateur et qui est configuré pour déplacer les organes de fixation 41 de la position de fixation à la position de libération. De façon avantageuse, l'organe d'actionnement 47 est monté mobile en rotation par rapport au couvercle 11 autour d'un axe d'actionnement, par exemple colinéaire avec un axe central du couvercle 11, et entre une première position d'actionnement et une deuxième position d'actionnement. L'organe d'actionnement 47 et les organes de fixation 41 sont configurés de telle sorte qu'un déplacement de l'organe d'actionnement 47 de la première position d'actionnement à la deuxième position d'actionnement entraîne un déplacement des organes de fixation 41 de la position de fixation à la position de libération.

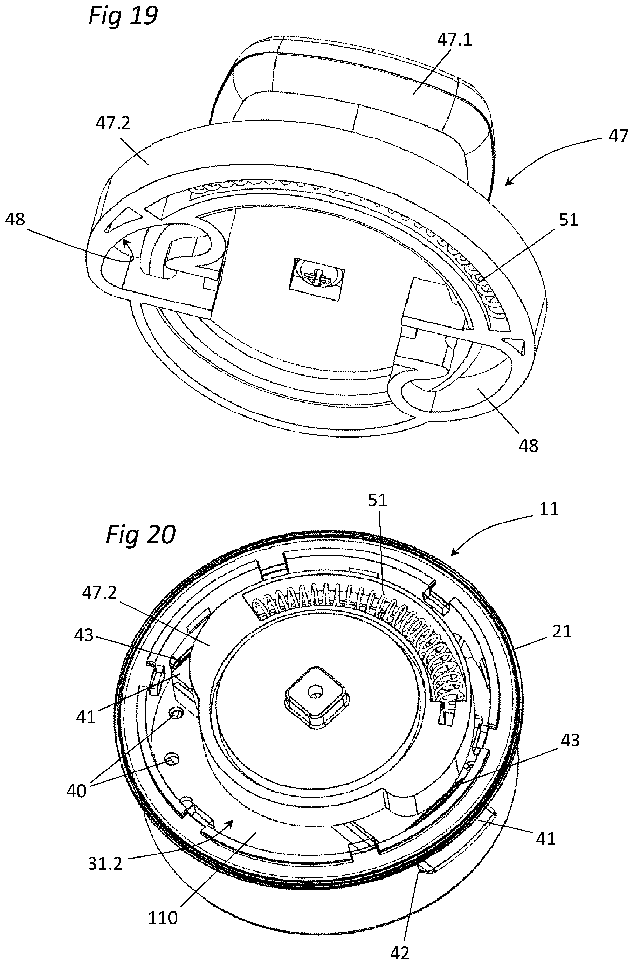

Selon le mode de réalisation représenté sur les figures 12 à 22, l'organe d'actionnement 47 comporte deux surfaces de came 48 (voir la figure 19), et chaque organe de fixation 41 comporte un ergot 49 (voir la figure 18) en contact avec une surface de came 48 respective. Chaque ergot 49 est en contact glissant sur la surface de came 48 respective de telle sorte que, lorsque l'organe d'actionnement 47 est déplacé de la première position d'actionnement à la deuxième position d'actionnement, chaque ergot 49 se déplace par rapport à l'organe d'actionnement 47 en glissant sur la surface de came 48 respective et entraîne un déplacement de l'organe de fixation 41 respectif de la position de fixation à la position de libération. De façon avantageuse, le mécanisme d'actionnement 46 comporte un élément de rappel 51 (voir les figures 19 et 20), tel qu'un ressort de rappel logé dans le couvercle 11 et prenant appui d'une part sur l'organe d'actionnement 47 et d'autre part sur le couvercle 11, configuré pour rappeler l'organe d'actionnement 47 dans la première position d'actionnement.

Selon le mode de réalisation représenté sur les figures 12 à 22, l'organe d'actionnement 47 comporte une partie de poignée 47.1 configurée pour être manipulée par un utilisateur, et une partie d'actionnement 47.2, qui présente une forme générale de disque et qui est logée dans le couvercle 11, configurée pour coopérer avec les organes de fixation 41.

Comme montré plus particulièrement sur les figures 13 et 16, la bouilloire 2 comporte un dispositif d'indexage angulaire, également nommé dispositif de détrompage, configuré pour définir une unique position de fixation du couvercle 11 sur le contenant 4. Le dispositif d'indexage angulaire peut par exemple comporter au moins un élément d'indexage 52, tel qu'une patte d'indexage ou un bossage d'indexage, prévu sur le contenant 4 et au moins un logement d'indexage 53 prévu sur le couvercle 11 et configuré pour coopérer avec l'au moins un élément d'indexage 52.

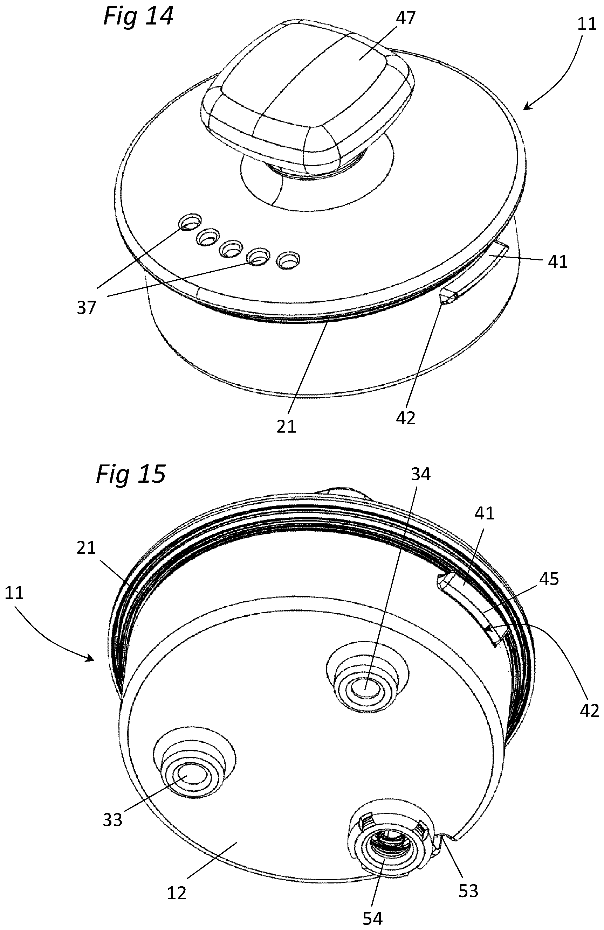

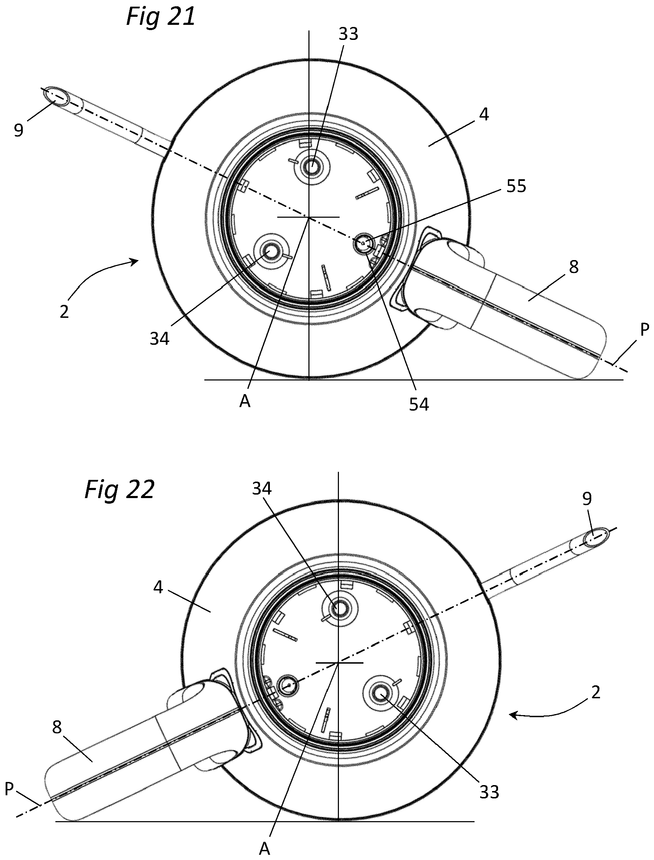

Comme montré plus particulièrement sur les figures 15 et 21, le couvercle 11 comporte en outre un orifice de vidange 54 à travers lequel de l'eau contenue dans le couvercle 11 peut être évacuée hors du couvercle 11. L'orifice de vidange 54 est relié fluidiquement à la chambre interne 31 délimitée par le couvercle 11. De façon avantageuse, l'orifice de vidange 54 est situé dans une partie arrière du couvercle 11 et débouche d'une part dans une paroi de fond de la chambre interne 31 et d'autre part dans la face inférieure 12 du couvercle 11.

Comme montré sur les figure 13 et 21, le contenant 4 comporte un organe d'obturation 55 configuré pour obturer l'orifice de vidange 54 lorsque le couvercle 11 est fixé au contenant 4 et pour libérer l'orifice de vidange 54 lorsque le couvercle 11 est retiré. Selon le mode de réalisation représenté sur les figures, l'organe d'obturation 55 est un doigt d'obturation configuré pour pénétrer dans l'orifice de vidange 54 et obturer l'orifice de vidange 54. L'organe d'obturation 55 peut par exemple présenter une forme globalement tronconique.

Selon le mode de réalisation représenté sur les figures, l'organe d'obturation 55 est situé à proximité du ou des élément(s) d'indexage 52. De façon avantageuse, l'organe d'obturation 55 et le ou les élément(s) d'indexage 52 sont réalisés en une seule pièce.

Selon un mode de réalisation de l'invention non représenté sur les figures, le contenant 4 pourrait comporter le bec verseur 9.

Selon un autre mode de réalisation de l'invention non représenté sur les figures, la bouilloire 2 pourrait comporter un dispositif de contrôle électromécanique comportant un élément bimétallique, et le circuit d'évacuation de vapeur pourrait comporter au moins une ouverture d'évacuation de vapeur 37 qui est configurée pour être reliée fluidiquement à la chambre interne 31 délimitée par le couvercle 11 et qui est configurée pour diriger la vapeur contenue dans la chambre interne 11 vers l'élément bimétallique, le dispositif de contrôle électromécanique étant configuré de telle sorte qu'un afflux de vapeur sur l'élément bimétallique déclenche un arrêt de la chauffe de la bouilloire 2.

L'élément bimétallique peut par exemple être disposé dans la poignée de préhension 8. Dans ce cas, l'au moins une ouverture d'évacuation de vapeur 37 est prévue dans une partie arrière du couvercle 11 et est configurée pour être orientée vers la poignée de préhension 8.

Selon une variante de réalisation de l'invention, l'élément bimétallique pourrait être disposé dans une partie inférieure du contenant 4. Dans ce cas, l'au moins une ouverture d'évacuation de vapeur 37 est prévue dans une partie arrière du couvercle 11 et est configurée pour être reliée fluidiquement à un tube vapeur qui est agencé dans le contenant 4 et qui est relié fluidiquement à l'élément bimétallique.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Bouilloire (2) comprenant :
- un contenant (4) présentant un axe central (A) configuré pour s'étendre sensiblement verticalement lorsque le contenant (4) repose sur une surface horizontale, le contenant (4) délimitant un volume interne (5) destiné à contenir de l'eau et dans lequel l'eau est destinée à être chauffée et notamment portée à ébullition,
- une poignée de préhension (8),
- un bec verseur (9) configuré pour être situé à l'opposé de la poignée de préhension (8) par rapport à l'axe central (A) du contenant (4),
- un couvercle (11) configuré pour fermer le contenant (4), le couvercle (11) comprenant une face inférieure (12) configurée pour être située en regard du volume interne (5),
- un circuit d'évacuation de vapeur configuré pour convoyer, à l'extérieur du volume interne (5), de la vapeur générée dans le volume interne (5) lors d'une ébullition de l'eau contenue dans le volume interne (5), le circuit d'évacuation de vapeur comprenant :
∘ un premier orifice d'admission de vapeur (33) et un deuxième orifice d'admission de vapeur (34) qui sont prévus sur le couvercle (11) et qui débouchent dans la face inférieure (12) du couvercle (11) et à proximité d'un bord périphérique de la face inférieure (12) du couvercle (11), les premier et deuxième orifices d'admission de vapeur (33, 34) étant configurés pour être reliés fluidiquement au volume interne (5) délimité par le contenant (4), et pour être disposés de part et d'autre d'un plan vertical médian (P) de la bouilloire (2) qui passe par le bec verseur (9) et la poignée de préhension (8),
∘ une chambre interne (31) délimitée par le couvercle (11), et
∘ un premier tube d'écoulement de vapeur (35) comprenant une première ouverture d'entrée de vapeur reliée fluidiquement au premier orifice d'admission de vapeur (33) et une première ouverture de sortie de vapeur (350) débouchant dans la chambre interne (31), et un deuxième tube d'écoulement de vapeur (36) comprenant une deuxième ouverture d'entrée de vapeur reliée fluidiquement au deuxième orifice d'admission de vapeur (34) et une deuxième ouverture de sortie de vapeur (360) débouchant dans la chambre interne (31),
**caractérisée en ce que** la bouilloire (2) est configurée de telle sorte que, lorsque la bouilloire (2) est renversée et que la poignée de préhension (8) et un premier côté latéral du contenant (4) reposent de manière stable sur une surface horizontale, le premier orifice d'admission de vapeur (33) est situé au-dessus du niveau d'eau dans le volume interne (5) et est localisé dans un premier secteur angulaire (S1) qui est centré sur l'axe central (A) du contenant (4), qui présente un premier angle de secteur (α1) inférieur ou égal à 60° et dont une bissectrice est contenue dans un premier plan vertical contenant l'axe central (A) du contenant (4), et de telle sorte que, lorsque la bouilloire (2) est renversée et que la poignée de préhension (8) et un deuxième côté latéral du contenant (4) reposent de manière stable sur une surface horizontale, le deuxième orifice d'admission de vapeur (34) est situé au-dessus du niveau d'eau dans le volume interne (5) et est localisé dans un deuxième secteur angulaire (S2) qui est centré sur l'axe central (A) du contenant (4), qui présente un deuxième angle de secteur (α2) inférieur ou égal à 60° et dont une bissectrice est contenue dans un deuxième plan vertical (P2) contenant l'axe central (A) du contenant (4).

2. Bouilloire (2) selon la revendication 1, dans laquelle les premier et deuxième orifices d'admission de vapeur (33, 34) sont configurés pour être disposés de manière symétrique par rapport au plan vertical médian (P) de la bouilloire (2).

3. Bouilloire (2) selon la revendication 1 ou 2, dans laquelle les première et deuxième ouvertures de sortie de vapeur (350, 360) sont configurées pour être disposées de part et d'autre du plan vertical médian (P) de la bouilloire (2).

4. Bouilloire (2) selon l'une quelconque des revendications 1 à 3, dans laquelle les premier et deuxième orifices d'admission de vapeur (33, 34) sont situés dans une moitié avant de la face inférieure (12) du couvercle (11).

5. Bouilloire (2) selon l'une quelconque des revendications 1 à 4, dans laquelle les première et deuxième ouvertures de sortie de vapeur (350, 360) sont situées dans une partie arrière de la chambre interne (31).

6. Bouilloire (2) selon l'une quelconque des revendications 1 à 5, dans laquelle les première et deuxième ouvertures de sortie de vapeur (350, 360) sont configurées pour être orientées à l'opposé du bec verseur (9).

7. Bouilloire (2) selon l'une quelconque des revendications 1 à 6, dans laquelle le premier tube d'écoulement de vapeur (35) comporte une première portion de tube primaire (35.1) reliée fluidiquement au premier orifice d'admission de vapeur (33) et une deuxième portion de tube primaire (35.2) s'étendant depuis la première portion de tube primaire (35.1), la deuxième portion de tube primaire (35.2) étant courbée vers l'arrière de la bouilloire (2), et le deuxième tube d'écoulement de vapeur (36) comporte une première portion de tube secondaire (36.1) reliée fluidiquement au deuxième orifice d'admission de vapeur (34) et une deuxième portion de tube secondaire (36.2) s'étendant depuis la première portion de tube secondaire (36.1), la deuxième portion de tube secondaire (36.2) étant courbée vers l'arrière de la bouilloire (2).

8. Bouilloire (2) selon la revendication 7, dans laquelle la première portion de tube primaire (35.1) et la première portion de tube secondaire (36.1) s'étendent respectivement dans un premier plan d'extension et un deuxième plan d'extension qui sont sensiblement perpendiculaires au plan vertical médian (P) de la bouilloire (2).

9. Bouilloire (2) selon l'une quelconque des revendications 1 à 8, dans laquelle le circuit d'évacuation de vapeur comporte au moins une ouverture d'évacuation de vapeur (37) prévue sur le couvercle (11) et reliée fluidiquement à la chambre interne (31) délimitée par le couvercle (11), l'au moins une ouverture d'évacuation de vapeur (37) étant configurée pour permettre une évacuation de la vapeur contenue dans la chambre interne (31) à l'extérieur du couvercle (11), et par exemple vers l'extérieur de la bouilloire (2).

10. Bouilloire (2) selon la revendication 9, laquelle comporte un dispositif de contrôle électromécanique comportant un élément bimétallique, l'au moins une ouverture d'évacuation de vapeur (37) étant configurée pour diriger la vapeur contenue dans la chambre interne (31) vers l'élément bimétallique, le dispositif de contrôle électromécanique étant configuré de telle sorte qu'un afflux de vapeur sur l'élément bimétallique déclenche un arrêt de la chauffe de la bouilloire.

11. Bouilloire (2) selon l'une quelconque des revendications 1 à 10, laquelle comporte en outre un dispositif de fixation configuré pour fixer de manière amovible le couvercle (11) au contenant (4).

12. Bouilloire (2) selon l'une quelconque des revendications 1 à 11, dans laquelle le couvercle (11) comporte un conduit de versage (24) configuré pour convoyer vers le bec verseur (9) de l'eau contenue dans le volume interne (5), la bouilloire (2) comprenant un obturateur (27) monté mobile sur le couvercle (11) entre une position de fermeture dans laquelle l'obturateur (27) obture le conduit de versage (24) et empêche un écoulement d'eau à travers le conduit de versage (24) et une position d'ouverture dans laquelle l'obturateur (27) libère le conduit de versage (24) et autorise un écoulement d'eau à travers le conduit de versage (24).
